# EUROPEAN PATENT SPECIFICATION

(11) **EP 3 205 754 B1**
(45) Date of publication and mention of the grant of the patent: **25.03.2020**
(21) Application number: 17156318.2
(22) Date of filing: 15.02.2017
(51) Int. Cl.: D01F 4/00, D06C 29/00, D06M 10/00, D01D 5/00, C08H 1/06

(54) **METHOD FOR MAKING ELECTROCOMPACTED LEATHER**
VERFAHREN ZUR HERSTELLUNG VON ELEKTROKOMPAKTIERTEN LEDER
PROCÉDÉ DE FABRICATION DE CUIR ÉLECTROCOMPACTÉ

(30) Priority: 15.02.2016 US 201662295438 P; 15.02.2016 US 201662295444 P
(43) Date of publication of application: 16.08.2017
(73) Proprietor: Modern Meadow, Inc., Nutley, New Jersey 07110 (US)
(72) Inventor: Marga, Francoise Suzanne, Brooklyn, New York 11220 (US); Jakab, Karoly Robert, Brooklyn, New York 11220 (US); Purcell, Brendan, Brooklyn, New York 11220 (US); Williamson, David, Brooklyn, New York 11220 (US)
(74) Representative: J A Kemp LLP

(56) References cited:
- EP-A2- 1 674 500
- WO-A1-2014/126876
- WO-A2-02/32642
- US-A1- 2004 116 032
- CHENG X ET AL: "An electrochemical fabrication process for the assembly of anisotropically oriented collagen bundles", BIOMATERIALS, ELSEVIER SCIENCE PUBLISHERS BV., BARKING, GB, vol. 29, no. 22, 1 August 2008 (2008-08-01), pages 3278-3288, XP022673752, ISSN: 0142-9612, DOI: 10.1016/J.BIOMATERIALS.2008.04.028 [retrieved on 2008-05-09]
- MARINO A A ET AL: "PIEZOELECTRICITY IN COLLAGEN FILMS", CALCIFIED TISSUE INTERNATI, NEW YORK, NY, US, vol. 31, no. 3, 1 January 1980 (1980-01-01), pages 257-259, XP009066271, ISSN: 0171-967X, DOI: 10.1007/BF02407190

## Description

### FIELD

This invention relates to engineered/biofabricated leather materials that mimic naturally-derived materials. In particular, this invention is directed towards biofabricated leather materials formed by an electrocompaction method.

### BACKGROUND

Leather is used in a vast variety of applications, including furniture upholstery, clothing, shoes, luggage, handbag and accessories, and automotive applications. Currently, skins of animals are used as raw materials for natural leather. However, skins from livestock pose environmental concerns because raising livestock requires enormous amounts of feed, pastureland, water, and fossil fuel. Livestock also produces significant pollution for the air and waterways. In addition, use of animal skins to produce leather is objectionable to socially conscious individuals. The global leather industry slaughters more than a billion animals per year. Most of the leather comes from countries with no animal welfare laws or have laws that go largely or completely unenforced. Leather produced without killing animals would have tremendous fashion novelty and appeal.

Natural leather is typically a durable and flexible material created by the tanning of animal rawhide and skin, often cattle hide. Tanning is generally understood to be the process of treating the skins of animals to produce leather. Tanning may be performed in any number of well-understood ways, including vegetable tanning (e.g., using tannin), chrome tanning (chromium salts including chromium sulfate), aldehyde tanning (using glutaraldehyde or oxazolidine compounds), syntans (synthetic tannins, using aromatic polymers), and the like.

Natural leather is typically prepared in three main parts: preparatory stages, tanning, and crusting. Surface coating may also be included. The preparatory stages prepare the hide/skin for tanning, and unwanted raw skin components are removed. The preparatory stages may include: preservation, soaking (rehydrating), liming, de-hairing, de-fleshing (removing subcutaneous material), splitting, re-liming, deliming (to remove de-hairing and liming chemicals), bating (protein proteolysis), degreasing, frizzing, bleaching, pickling (changing pH), de-pickling, etc.

Tanning is performed to convert proteins in the hide/skin into a stable material that will not putrefy, while allowing the material to remain flexible. Chromium is the most commonly used tanning material. The pH of the skin/hide may be adjusted (e.g., lowered, e.g. to pH 2.8-3.2) to enhance the tanning; following tanning the pH may be raised ("basification" to a slightly higher level, e.g., pH 3.8-4.2).

Crusting refers to the post-tanning treatment that may include coloring (dying), thinning, drying or hydrating, and the like. Examples of crusting techniques include: wetting (rehydrating), sammying (drying), splitting (into thinner layers), shaving, neutralization (adjusting pH to more neutral level), retanning, dyeing, fatliquoring, filling, stuffing, stripping, whitening, fixation of unbound chemicals, setting, conditioning, softening, buffing, etc.

In practice, the process of converting animal skin into leather may include sequential steps such as: unhairing/dehairing, liming, deliming and bating, pickling, tanning, neutralizing/Dyeing and Fat liquoring, drying and finishing. The dehairing process may chemically remove the hair (e.g., using an alkali solution), while the liming step (e.g., using an alkali and sulfide solution) may further complete the hair removal process and swell ("open up") the collagen. During tanning, the skin structure may be stabilized in the "open" form by replacing some of the collagen with complex ions of chromium. Depending on the compounds used, the color and texture of the leather may change. Tanned leather may be much more flexible than an untreated hide, and also more durable.

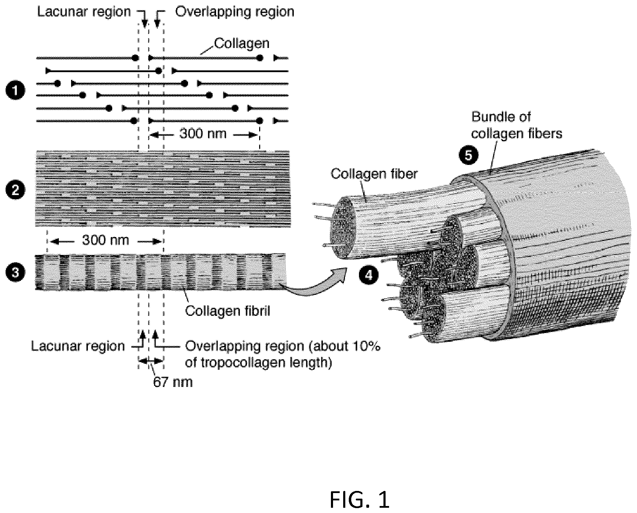

Skin, or animal hide, is formed primarily of collagen, a fibrous protein. Collagen is a generic term for a family of at least 28 distinct collagen types; animal skin is typically type 1 collagen (so the term collagen is typically assumed to be type 1 collagen), although other types of collagen may be used in forming leather. Collagens are characterized by a repeating triplet of amino acids, -(Gly-X-Y)*ₙ*-, so that approximately one-third of the amino acid residues are in collagen are glycine. X is often proline and Y is often hydroxyproline. Thus, the structure of collagen may consist of twined triple units of peptide chains of differing lengths. Different animals may produce different amino acid compositions of the collagen, which may result in different properties (and differences in the resulting leather). Collagen fiber monomers may be produced from alpha-chains of about 1050 amino acids long, so that the triple helix takes the form of a rod of about 300 nm long, with a diameter of 1.5 nm. In the production of extracellular matrix by fibroblast skin cells, triple helix monomers may be synthesized and the monomers may self-assemble into a fibrous form. These triple helices may be held together by salt links, hydrogen bonding, hydrophobic bonding, and covalent bonding. Triple helices can be bound together in bundles called fibrils, and fibril bundles come together to create fibers (FIG. 1). These structures have a characteristic banded appearance due to the staggered overlap monomers. The distance between bands is approximately 67 nm for Type 1 collagen. Fibers typically divide and join with each other throughout a layer of skin. Variations of the crosslinking or linking may provide strength to the material. Fibers may have a range of diameters depending on the type of animal hide. In addition to type I collagen, skin (hides) may include other types of collagen as well, including type III collagen (reticulin), type IV collagen, and type VII collagen.

The various types of collagen exist throughout the mammalian body. For example, besides being the main component of skin and animal hide, Type I collagen also exists in cartilage, tendon, vascular ligature, organs, muscle, and the organic portion of bone. Successful efforts have been made to isolate collagen from various regions of the mammalian body in addition to the hide/skin. Decades ago, researchers found that at neutral pH, acid-solubilized collagen aggregated into fibrils composed of the same cross-striated patterns observed in native collagen. (Schmitt F.O. J. Cell. Comp Physiol. 1942;20:11) This lead to use of collagen being used in tissue engineering and a variety of biomedical applications. In more recent years, collagen has been harvested from bacteria and yeast using recombinant techniques.

Regardless of the type of collagen, all are formed and stabilized through a combination of electrostatic interactions involving salt bridges, hydrogen bonding, Van der Waals interactions, and covalent bonding often catalyzed by enzymatic reactions. For Type I collagen fibrils, fibers, and fiber bundles, its complex assembly is achieved *in vivo* during development and is critical in providing mechanical support to the tissue while allow for cellular motility and nutrient transport.

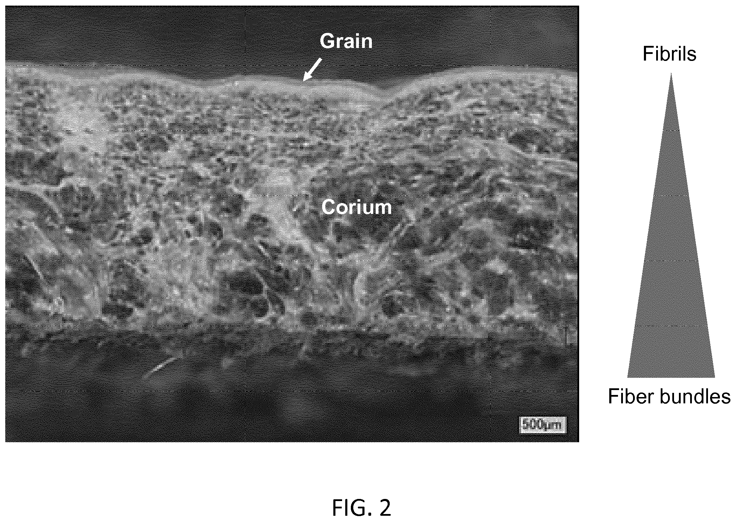

In animal hide, slight variations in fibrous collagen organization are observed with the age and species of the animal resulting in differences in the physical properties of the tissue (and differences in the resulting leather). Variations in collagen organization are also observed through the thickness of the hide. The top grain side of hide is composed of a fine network of collagen fibrils while deeper sections (corium) are composed of larger fiber bundles (FIG. 2). The smaller fibril organization of the grain layer gives rise to a soft and smooth leather aesthetic while the larger fiber bundle organization of deeper regions gives rise to a rough and course leather aesthetic. The porous, fibrous organization of collagen allows molecules to more easily penetrate, stabilize, and lubricate the hide during leather tanning. The combination of the innate collagen organization in hide along with the modifications achieved through tanning give rise to the desirable strength, drape and aesthetic properties of leather.

Many attempts have been made throughout history to imitate leather with a variety of synthetic materials. As mentioned to earlier, there is a strong demand for alternatives to leather as leather production involves the slaughter of animals, which carries with it a large environmental impact to raise and process. The increasing demand for leather products also promotes stockyard practices and factory farming where mistreatment of animals has been documented. As a result, the quality and availability of leather continues to decrease as planetary resources become ever more strained.

Attempts to create synthetic leather have all come up short in reproducing leather's unique set of properties. Examples of synthetic leather materials include Clarino, Naugahyde, Corfam, Alcantara, amongst others. They are made of various chemical and polymer ingredients, including polyvinyl chloride, polyurethane, nitrocellulose coated cotton cloth, polyester, or other natural cloth or fiber materials coated with a synthetic polymer. These materials are assembled using a variety of techniques, often drawing from chemical and textile production approaches, including non-woven and advanced spinning processes. While many of these materials have found use in footwear, upholstery, and apparel applications, they have fallen short for luxury application, as they cannot match the breathability, handfeel, or aesthetic properties that make leather so unique and beloved. To date, no alternative leather-like materials have been made from collagen or collagen-like proteins, and therefore these materials lack the chemical composition and structure of collagen that produces a leather aesthetic. The abundance of acidic and basic amino acid side groups along the collagen polypeptide chain, along with its organization into a strong yet porous, fibrous structure allow modification through tanning processes and produces the desirable strength, softness and aesthetic of leather.

Leather derived from animal mainly consists of collagen type I when hides are obtained from adult animals, and significant proportion of collagen types III and IV, together with collagen type I when skins are derived from young animals. The composition and ratio of collagen types affect the physical properties of leather, a younger hide with proper tanning provides the softest leather.

The top grain surface of leather is often regarded as the most desirable due to its soft texture and smooth surface. As discussed previously, the grain is a highly porous network of organized collagen fibrils. An organized collagen fibril is arranged as endogenous collagen to have lacunar regions and overlapping regions. See, e.g., FIG. 1. The strength of the collagen fibril, microscale porosity, and density of fibrils in the grain may allow tanning agent penetration to stabilize and lubricate the fibrils, producing a soft, smooth and strong material that people desire.

It would be desirable to manufacture leathers (e.g., by engineering/biofabrication) that can be controllably and reproducibly provide leather having desired properties, and in particular leather that may be made without the need to kill animals. Described herein are engineered/biofabricated leathers and methods of making them that may address the issues raised above.

### SUMMARY

In general, described herein are methods of forming a biofabricated leather material. In particular, described herein are methods of forming a biofabricated leather material by electrocompaction or electrospinning. Although both methods (electrospinning and electrocompaction) are described and illustrated herein separately, it should be understood that two methods may be combined, and some or all of the steps or components (e.g., the starting materials, further processing steps, etc.) described for one may be applied to the either technique.

The present invention is defined in the claims. According to the present invention, there are provided methods for making an electrocompacted leather material by: applying a solution of non-human, monomeric collagen onto an electrocompaction surface; compacting the protein into a dense network with an electrical field; inducing fibrillation of the protein; incorporating lubricant in the network; and removing water from the network.

For example, a method of making an electrocompacted leather material may include: applying a solution of non-human, monomeric collagen in an aqueous buffer onto an electrocompaction surface, wherein the solution is substantially free of collagen fibers and fibril bundles; compacting the collagen into a dense network with an electrical field; inducing fibrillation of the collagen to form collagen fibrils; stabilizing the fibrillar collagen network; incorporating lubricant in the collagen network; dyeing and applying a surface finish on the collagen network; and removing water from the stabilized network and drying the collagen network.

Any appropriate collagen monomers may be used. As used herein a collagen monomer may refer to tropocollagen, e.g., a triple helical tropocollagen, which may be polymerized to form fibrils, secondary- and tertiatry- structures, as illustrated in FIG. 1. Any type of collagen may be used, including in particular Type III collagen (non-human) or combinations of collagen subtypes (e.g., Type III and type I). The collagen monomers may be polymerized into dimers, trimers and higher order oligomers prior to compaction and fibrillation.

In any of the methods described herein, the collagen fibrils formed as part of the method may be stabilized by adding a crosslinking agent (e.g., an aldehyde, such as gluteraldehyde) to the aqueous solution to stabilize the collagen fibrils. The fibrillated collagen may be stabilized through chromium, aldehyde or vegetable tannin based tanning processes.

As part of any of the methods described herein, the water may be removed from the collagen fibrils after forming and electrocompacing and/or electrospinning. For example, a material that displaces the water may be used, by reacting the collagen fibrils with a dewatering agent to displace water bound to the collagen fibrils with the dewatering agent. The dewatering agent may be dewatering and coalescing agent, such as a syntan (e.g., a sulfonated condensation product of an aromatic compound), which may displace the water bound to the collagen fibrils. Alternatively or additionally, water may be removed from the fibrillated collagen through solvent exchanges with solvents such as acetone, ethanol, or diethyl ether.

The collagen monomer solution is free or substantially free of collagen fibers and fibril bundles. The collagen monomers may be recombinant. The collagen (and therefore the resulting fibrils) may be modified to promote chemical or physical crosslinking between collagen fibrils. The collagen fibrils may be stabilized as a network through incorporating molecules with di, tri and multifunctional reactive groups such as chromium, amine, carboxylic acid, sulfate, sulfite, sulfonate, aldehyde, hydrazide, sulfhydryl, diazirine, aryl-azide, acrylate, epoxide, or phenol. These may be used with or without the additional (e.g., in a recombinant collagen) the incorporation of reactive groups for any of these added to the collagen.

Any method for fibrillating the collagen may be used, including the use of salt and pH. For example, fibrillation may be induced through the addition of salts such as sodium phosphate, potassium phosphate, potassium chloride and sodium chloride, and/or through a pH shift following the addition of acids or bases such as sodium carbonate, sodium bicarbonate and sodium hydroxide. Alternatively or additionally, fibrillation may be induced (or aided) through the incorporation of nucleation agents such as collagen microgels, microparticles, nanoparticles, and natural and synthetic microfibers.

In any of the methods described herein one or more spacing agent may be included, such as a bead, fiber or the like.

Any of the methods described herein may include a drying step instead or in addition to displaying the water in the fibrils. For example, any of these methods may include drying the fibrillated collagen through air or vacuum drying to remove some of the water. For example, at least 80% of the water is removed from the fibrillated collagen.

Lubricants (e.g., fat liquors), dyes, tanning agents, spacer material, or the like may be incorporated into the material prior to drying and/or after drying. Thus, the resulting material may have a uniform distribution of lubricants, tanning agent(s), dyes, spacing materials (e.g., microspheres), etc. throughout the entire volume of material (sheet) that is formed.

The resulting formed material may have fibrils that are 1 nm to 1 µm in diameter. The fibrils may be 100 nm to 1 mm in length. The fibrils may be arranged in a tangled (disordered) network throughout the entire volume, unlike traditional leather. For example, the fibril network may lack higher order fiber and fiber bundle organization throughout the entire formed material (e.g., the entire thickness). The fibril density may be, e.g., 5 mg/cc to 500 mg/cc. Virtually any thickness may be formed in this manner, including thickness of between about 0.05 mm to 2 mm or greater (e.g., 5mm, 6mm, 7 mm, 8 mm, 9 mm, 10mm, etc.).

Also described are methods of forming an electrospun leather material, by electrospinning a collagen solution to form an unwoven collagen network and tanning the electrospun protein. Such methods do not necessarily form part of the present invention, which is defined by the appended claims. For example, a method of forming an electrospun leather material may include: culturing collagen-secreting cells; harvesting collagen from the cells into a collagen solution; forming an unwoven network of collagen by electrospinning the collagen solution; and tanning the unwoven electrospun network of collagen. As previously mentioned, any of the steps used for electrocompaction described herein may be used with electrospinning instead and any of the steps used for electrospinning may be used for electrocompaction. For example, any of these methods may include culturing protein-secreting cells and harvesting collagen from the cells to form the collagen (e.g., collagen monomer) solution. Alternatively or additionally, any of these methods may include acquiring collagen from an animal or plant source and forming a collagen solution from the acquired collagen.

Tanning (e.g., stabilizing the electrospun network) may include incorporating one or more of a chromium based, aldehyde based, epoxide based, or sulfo-NHS based crosslinkers into the dissolved collagen solution prior to electrospinning. For example, tanning may include stabilizing the electrospun network using a chromium- or aldehyde-based tanning process.

Any of these methods may include incorporating a lubricant into the unwoven electrospun network of collagen through a fatliquoring processes. The lubricant (e.g., oils such as fish oils, etc.) may be incorporated while the collagen is in solution before or after electrospinning or electrocompaction, before fibrillation, after fibrillation, etc.

Any of these methods may include dying the unwoven electrospun network of collagen. Drying may be done in air (including in a humidified chamber), by pulling a vacuum, compressing the material, or some combination thereof. During or after drying, the method may include staking (e.g., mechanically manipulating) the material. For example, the material may be mechanically manipulated midway or partway through the drying. The material may be dried to a final water content of between about 10% and about 25% (e.g., between 15% and 20%, etc.).

Any of these methods may also include applying a finish to the surface of the unwoven electrospun network of collagen. For example, any of these methods may include retanning and finishing the unwoven electrospun network of collagen.

The biofabricated leathers described herein may be used in place of natural leather. For example, the biofabricated leather (e.g., formed by electrospinning and/or electrocompaction) may be used to form one or more of a: watchstrap, footwear, wallet, jewelry, belt, glove, handbag, briefcase, piece of luggage, upholstery for furniture or transportation, or clothing article.

### BRIEF DESCRIPTION OF THE DRAWINGS

FIG. 1 is a drawing showing the composition of collagen in a hierarchical fashion. 1) shows each collagen molecule and how they are packed with respect to neighboring collagen molecules; 2) shows stacked collagen that make up collagen fibers; 3) shows a cross-section of the collagen fibrils; 4) shows collagen fibers; and 5shows bundles of collagen fibers.
FIG. 2 is a picture showing the composition of buffalo hide. The top grain layer and the corium layer underneath are shown and the relative amount of collagen fiber bundles are indicated.

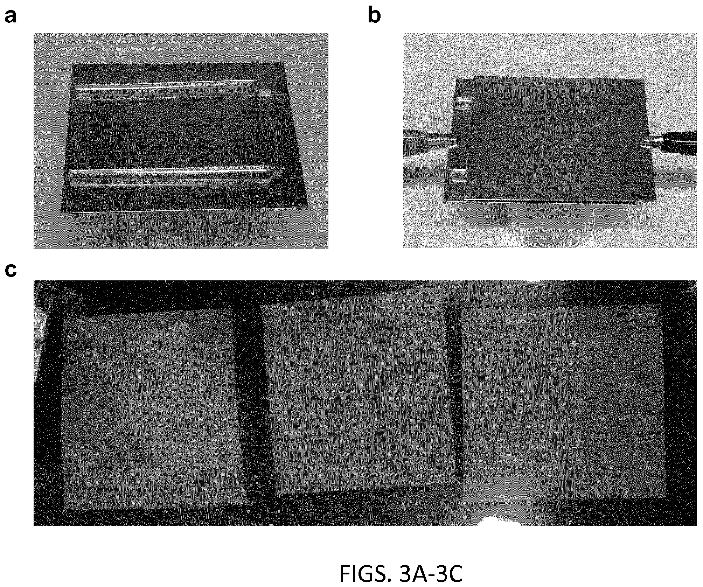

FIGS. 3A-3C illustrate the electrocompaction of collagen. FIG. 3A shows a compaction cell with the silicone spacers. FIG. 3B shows an assembled cell with collagen solution between the plates before and after assembly. FIG. 3C shows compacted and fibrillated collagen matrix, forming a gel. The gels become opaque after fibrillation.

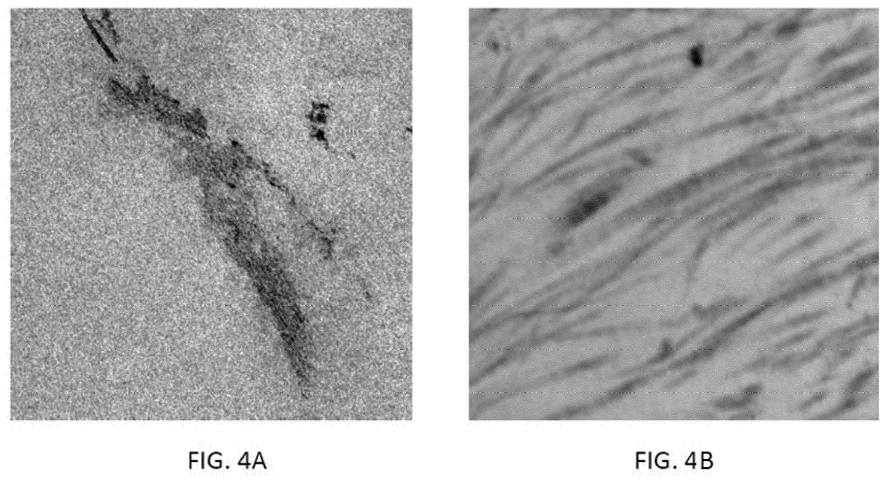

FIGS. 4A and 4B is a transmission electron micrographs (TEM) of electrocompacted collagen material (e.g., which may be referred to as a hydrogel) before (FIG. 4A) and after (FIG. 4B) fibrillation. The presence of periodic dark bands in FIG. 4B indicate the presence of fibrils.

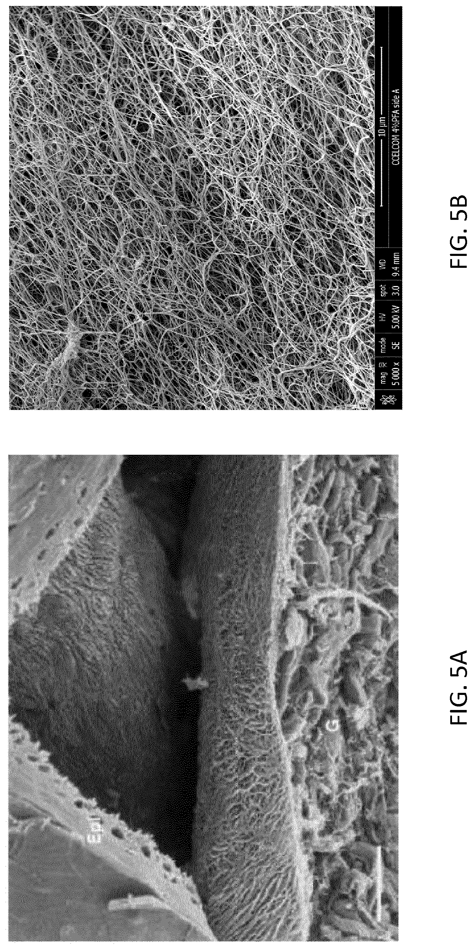

FIGS. 5A and 5B show a scanning electron micrographs (SEM) of bovine grain (FIG. 5A, on the bottom) and electrocompacted collagen (FIG. 5B) at two magnifications. The dense fibrillar network indicates assembly of collagen into a network similar to the grain of genuine leather. FIG. 5A is adapted from "Structure of bovine skin and hair root," Matthias Wagner and David Bailey, TFL.

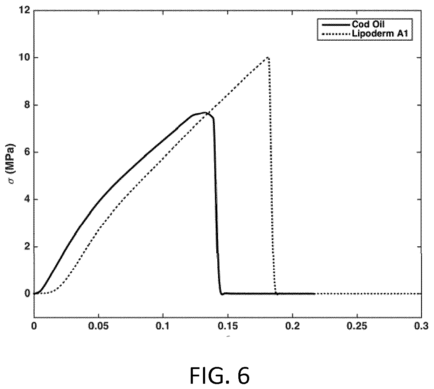

FIG. 6 is a strain-stress graph of the dried electrocompacted collagen material following fatliquoring with different materials. Lipoderm A1 fatliquor provides more internal lubrication than cod liver oil, indicated by the increase in both tensile strength and elongation, preventing fibers to stick, known to result in a brittle material.

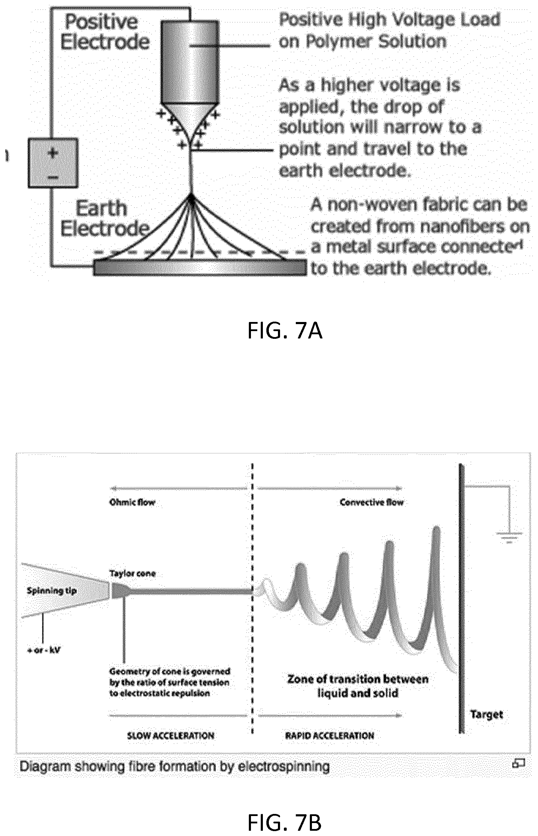

FIG. 7A illustrates the generic technique for electrospinning, showing the use of appositive high voltage load to spin a solution of material (e.g. collagen) onto a target.
FIG. 3B shows another illustration of electrospinning to form fibers that may be deposited onto a target.
FIGS. 8A-8D illustrate prior art examples of networks of fibers obtained by electrospinning. In FIG. 8A (adapted from Zhou J, Sui F, Yao M et al., Neural Regeneration Research, 2013 8(16): 1455-1464) oriented (on left) and random (right) deposition of collagen nano-fibers is shown. FIGS. 8B-8D show example of mono (FIG. 8B) and bi-layered (FIG. 8C and larger magnification view in FIG. 8D) collagen fibers are shown.
FIG. 9A illustrates one example of a collagen network formed by electrospinning at two magnifications. Any appropriate thickness of collagen network may be formed in this manner.
FIG. 9B illustrates a cross-linked (by addition of DHT) electrospun collagen network at two magnifications.
FIG. 9C is a table comparing the stability of non- (or pre-) cross-linked and cross-linked collagen networks such as those shown in FIGS. 9A and 9B in various solvents.
FIG. 9D shows exemplary fiber dimensions (diameter, planar density and thicknesses) for the electrospun collagen networks (forming electrospun leather) as described herein. Any appropriate range of collagen fiber dimensions may be formed.
FIG. 10 shows exemplary images of electrospun collagen networks (forming electrospun leather materials) before, during and after fatliquoring in non-cross-linked and cross-linked samples.
FIG. 11 is a table illustrating weights in an example of different electrospun leathers that are ether cross-linked or non-cross-linked before and after fatliquoring.
FIGS. 12A-12D illustrate mechanical properties of electrospun leather fabricated as described herein before and after fat liquoring in ethanol/cod oil (e.g., 80/20).
FIGS. 13A and 13B show mechanical properties of electrospun leather before and after fatliquoring in ethanol/casterol oil (80/20). FIG. 13A shows elongate percent and FIG. 13B shows tensile strength.

### DETAILED DESCRIPTION

In general, described herein are methods of forming biofabricated leather materials from a solution of, e.g., monomeric, collagen by elctrocompaction and/or electrospinning. The resulting material may be referred to as electrocompacted leather material or electrospun leather. Also described herein are the resulting materials, which may be structurally (including ultrastructurally) and/or compositionally distinct from native (e.g., "natural" leathers) and other man-made leather materials.

Reconstituted collagen networks have been widely employed in biomedical applications, regenerative medicine and tissue engineering, however to date such reconstituted collagen networks have not been made into leathers that may be used in place of natural leather. For example, collagen may be obtained from animal tissues known to be abundant in collagen type I (such as tendons and skin) via acid extraction and/or enzymatic digestion, purified and stored in a weak acidic solution, consisting of mixtures of monomers, dimers and trimers of the collagen triple helix. Fibrillogenesis may be initiated by adjusting the pH and ionic strength of the solution; the monomers either self-assemble into fibrils and/or connect through chemical crosslinkers forming a fibril matrix. Fibril formation is not restricted to full length, extracted collagen monomers only: recombinant collagen and collagen-like proteins (often truncated) fibrillate in a similar way when pH and ionic strength is optimized. This method has a disadvantage in manufacturing gels of high concentration and orientation of fibers, collagen concentration in animal hide is around 200-300 mg/ml. To attain such density further processing may be required, such as drying and mechanical compaction as described herein.

Collagen matrices (including hydrogels) of high density and orientation may be manufactured via isoelectric focusing. This method may rely on the concentration of ampholytic molecules such as collagen by manipulating the electrochemical environment of collagen in a solution. Briefly, collagen may be extracted from animal tissues as mentioned before, purified, then dialyzed against deionized water, removing salts and acids. The solution may be poured between two linear or planar electrodes and an electric field and current is applied across the collagen solution, resulting in a pH gradient. The collagen molecules may then migrate and accumulate either in a narrow string (linear electrodes) or in a plane (planar electrodes) at a pH value corresponding to their isoelectric point. The duration of the migration and the thickness of the assembling collagen layer may depend on the voltage applied, as well as the distance between the plates. When migration ceases (indicated by a more or less stable current) the resulted collagen structure is removed and placed in an aqueous environment where adjustment of pH and ionic strength will promote fibrillogenesis and crosslinking yielding in a highly compacted, dense collagen matrix.

Without substantial modification, such materials (e.g., gels) may be suitable for research and development performing basic research in cell and matrix biology (including tissue engineering and regenerative medicine), however they are not usually appropriate, without significant further processing, to form leather. Described herein are leather-like material (engineered leather/biofabricated leather) and methods for forming such leather-like materials for consumer use using electrocompacted and/or electrospun collagen networks.

### Electrocompaction

The biomaterials described herein that possess leather-like properties, may be formed from an electrocompacted and fibrillated collagen which is further cross-linked and lubricated at the structural fibril level, similar to tanned natural leather. This approach produces leather-like material similar to a leather grain, offering tunability across a wide range of properties (structure, strength, elongation, density, etc.) and it is not restrictive to collagen type I found in animal hide, a limitation of the traditional leather industry.

For example, in general a method for making an electrocompacted leather material may include: applying a solution of dissolved protein in aqueous buffer onto an electrocompaction surface; compacting the protein into a dense network with an electrical field; inducing fibrillation of the protein; removing water from the network; and incorporating lubricant in the network. The protein may be any appropriate protein, including collagen (any of the known 28+ types of collagen and variations thereof) and non-collagen proteins that may form (e.g., by self-assembly) fibrils, such as, e.g., keratin, chitin, etc.

A method according to the present invention for making an electrocompacted leather material includes: applying a solution of dissolved collagen in aqueous buffer onto an electrocompaction surface; compacting the collagen into a dense network with an electrical field; inducing fibrillation of the collagen network; removing water from the collagen network; and incorporating lubricant in the collagen network.

For example, a method for making an electrocompacted leather material, the method comprising: applying a solution of dissolved collagen in aqueous buffer onto an electrocompaction surface; compacting the collagen into a dense network with an electrical field; inducing fibrillation of the collagen; stabilizing the fibrillar collagen network; removing water from the collagen (including from the entire network and/or displacing water bound to the collagen fibrils); incorporating lubricant in the collagen network; dyeing and applying a surface finish on the collagen network; and drying the collagen network.

In any of these methods the protein monomers (e.g., collagen monomers) may be polymerized into dimers, trimers and higher order oligomers prior to compaction and fibrillation. The fibrillation may be induced through the addition of salts such as sodium phosphate, potassium phosphate, potassium chloride and sodium chloride. Fibrillation may be induced through a pH shift following the addition of acids or bases such as sodium carbonate, sodium bicarbonate and sodium hydroxide. Fibrillation may be induced through the incorporation of nucleation agents such as collagen microgels, microparticles, nanoparticles, and natural and synthetic micro fibers.

Collagen fibrils may be chemically modified to promote chemical or physical crosslinking between collagen fibrils. Stabilization of the fibrillar collagen network may be accomplished through incorporating molecules with di, tri and multifunctional reactive groups such as chromium, amine, carboxylic acid, sulfate, sulfite, sulfonate, aldehyde, hydrazide, sulfhydryl, diazirine, aryl-azide, acrylate, epoxide, or phenol.

Any of these electrocompacted leathers may be fixed, e.g. by cross-linking the collagen. For example, the fibrillated collagen may be stabilized through chromium, aldehyde or vegetable tannin based tanning processes known in the leather industry.

Any of these electrocompacted leathers may also have a reduced water content (e.g., may be dehydrated) compared to native leather. For example, the water content of the fibrillated collagen may be greater than 90% (w/w), which may be reduced to less than 15% (e.g., less than 5%, 6%, 7%, 8%, 9%, 10%, 11%, 12%, 13%, 14%, 15%, etc.) of the final leather. Thus, water may be removed from the collagen material through solvent exchanges with solvents such as acetone, ethanol, or diethyl ether. The water may be removed through air or vacuum drying. For example, at least 75%, 77%, 78%, 79%, 80%, 81%, 82%, 83%, 84%, 85%, etc. of the water may be removed.

Any of these electrocompacted leathers include a lubricant (e.g., by fat liquoring to add the lubricant). The lubricant may be any hydrophobic material, such as a lubricating fat and/or oil that may be incorporated into the material.

Any of these materials may be dyed, retanned, finished and dried through processes known in the leather industry.

In some variations, an electrocompacted leather material may be fabricated from a matrix of electrocompacted and cross-linked collagen fibrils as described herein and may include any of the 28 types of collagen proteins isolated from animal tissues or variants thereof. For example, collagen produced by expressing recombinant DNA in bacteria, plant, yeast, or mammalian cells may be used as the source collagen. The collagen or collagen-like proteins may be produced through chemical peptide synthesis technologies. In other variations, it is not necessary to form a hydrogel (or may not be accurate to refer to the resulting fibrils of collagen as a "hydrogel").

The collagen (e.g., in some cases a matrix of collagen fibrils) may be transformed into a leather-like material by removing water from the material, or in some cases displacing the water from the fibrils of collagen (e.g., using a dewetting agent), and incorporating crosslinking agents, fats, or oils to stabilize the collagen network. The final water content of the material may be between 25 and 10 % (e.g., between 15% and 20%, etc.) (w/w).

The material of the fibril network may be a porous network of collagen or collagen-like fibrils. The fibrils may be between about 1 nm to 1 µm in diameter. The fibrils may be between about 100 nm to 1 mm in length. The fibril network may lack higher order fiber and fiber bundle organization. The fibril density may be between about 5 mg/cc to 500 mg/cc (e.g., between 10 mg/cc to 400 mg/cc, between 20 mg/cc to 300 mg/cc, between 100 mg/cc to 400 mg/cc, or any subrange thereof). The thickness of of the material may be between about 0.05 mm to 10 mm (e.g., between 0.5 mm to 5 mm, greater than 1 mm, etc.); this thickness may be the thickness of the dried material. The elongation at break may be between 0% to 300%. The tensile strength may be between about 1 MPa to 100 MPa. The elastic modulus may be between about 1 kPa to 100 MPa.

The finished leather-like material may be used in any product where native leather is used, such as a watchstrap, footwear, wallet, jewelry, belt, glove, handbag, briefcase, piece of luggage, upholstery for furniture or transportation, or clothing article.

### Examples

Commercially available collagen type I was obtained from bovine skin via acetic acid extraction and pepsin digestion was purchased as a 6 mg/ml solution in 0.1 N hydrochloric acid. This stock solution (∼50 ml) was dialyzed against 5 gl of deionized water overnight. Silicone spacers of 1 or 2 mm diameter (in this example, the spacers are spherical, however other shapes and dimensions may be used) were arranged on a stainless steel or graphite plate to enclose a 2.5 x 5 cm area, open on one side (FIG. 3A). The dialyzed solution was poured into this mold and covered with a second plate, enclosing an approximately 1.25 ml volume between the two plates. The silicone spacers also served as electrical insulators between the plates. A stable, variable voltage source with current limiting capability was supplying the electrical current across the two plates (FIG. 3B), voltage and current was monitored with multimeters connected in parallel and in series to the plates. The electrical parameters were chosen to result in an electric field of 1-25 kV and current density of 0.5-10 A/m2. The duration of the electrocompaction process depended on the voltage applied and plate separation: increasing the electrical field strength was achieved either by increasing the voltage or decreasing the separation between the plates. The closer the plates were, the higher the pH gradient become, providing thus the capability to control layer thickness. The procedure was repeated by removing excess water from the top of the already compacted layer and replacing it with stock collagen solution. Thus, sequential compaction steps controlled the thickness of the final material. The resulting collagen sheets (FIG. 3C) consisted of closely associated, dense, entangled collagen monomers where no D-banding was observed (FIG. 4A) The collagen sheet was then incubated in the presence of PBS for a minimum of 2 hrs. to fibrillate it. The presence of fibers was confirmed by transmission electron microscopy (FIG. 4B), whereas the dense porous fibril network was visualized with scanning electron microscopy (FIG. 5).

The fibrillated and compacted collagen was dehydrated in a series of acetone solutions (3 x 1hr at 25°C). Following acetone dehydration, the collagen material was incubated in a fat liquor solution containing either 20% (v/v) cod liver oil or 20% (v/v) Lipoderm A1 fatliquor in 80% acetone overnight while shaking at 40rpm. Following incubation in the fatliquor solution, the material was dried at room temperature overnight. Mechanical analysis confirmed penetration of the cod oil into the material, preventing fibril-fibril sticking during drying (FIG. 6).

### ELECTROSPINNING

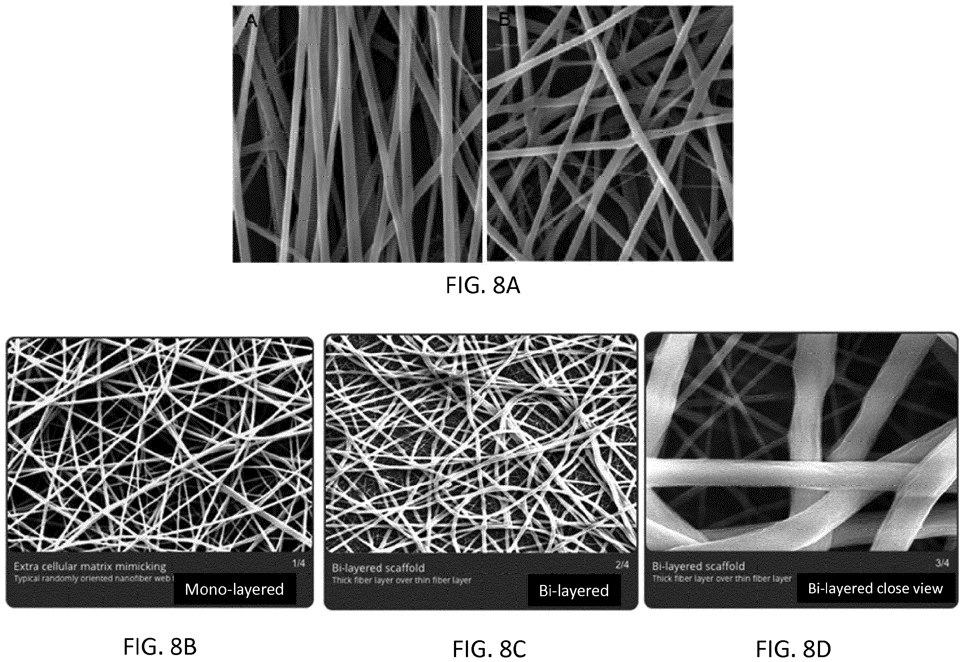

Although collagen networks have been produced as materials for biomedical applications such as forming implant for use in a body, very little has been done regarding forming collagen materials for use as durable, attractive and wearable fabrics such as leather, which raise a number of very different concerns and issues compared to biomedical materials. For example, when forming collagen structures for biomedical applications, monomers of the collagen triple helix have been extracted from animal tissue, such as bovine dermis, resolubilized in acidic solution and then electrospun. The basic principle of the electrospinning is illustrated in FIGS. 7A-7B. In the initial basic technology, fibers were deposited at a low rate and only in a random manner. Lately several advances have been achieved: the fibers formed by electrospinning can now be deposited according to a defined orientation (FIG. 8A), the density and diameters of fibers can be modified during the process to form multi-layered material (FIG. 8B), and the method may be scaled (see, e.g., http://www.sncfibers.com; and http://arsenalmedical.com/technology/axiocore-drug-delivery-platform).

For example, twisted, continuous nanofiber yarns may be formed having diameters of ∼100 micrometers. Described herein are methods for forming an engineered leather (e.g., biofabricated leather) using electrospinning, as well an engineered/biofabricated electrospun leathers made using these techniques. The resulting leather may be distinguishable from native leather, but may have the same gross properties, look and feel (texture) of native leather including grossly mimicking the dermis structure (grain and corium) of native leather.

In general, described herein are electrospun leather materials and methods of making them. For example, a method of forming an electrospun leather material may include: electrospinning a protein solution (e.g., a collagen solution) to form an unwoven (e.g., collagen) network and tanning the electrospun protein.

For example, a method of forming an electrospun leather material may include: culturing collagen-secreting cells; harvesting collagen from the cells into a collagen solution; forming an unwoven network of collagen by electrospinning the collagen solution; tanning the unwoven electrospun network of collagen.

In any of these variations, collagen may be used as described herein. Other proteins and particularly fibril or fiber-assembling proteins, may be used additionally or alternatively, such as keratins, chitins, etc.

In any of these examples, the protein solution (e.g., collagen) solution may be formed by a cell-cultured system, or from an animal or plant source (including cultured extracts from animals or plants that are cultured). For example, any of these methods may include culturing a protein-secreting cells and harvesting collagen from the cells into the collagen solution. Alternatively or additionally, any of these methods may include acquiring collagen from an animal or plant source and forming a collagen solution from the acquired collagen.

In general, tanning includes cross-liking of the protein that is being electrospun. In particular, tanning includes cross-linking of collagen. Tanning may comprise stabilizing the electrospun network by incorporating one or more of a chromium based, aldehyde based, epoxide based, or sulfo-NHS based crosslinkers into the dissolved collagen solution prior to electrospinning. For example, tanning may include stabilizing the electrospun network using a chromium- or aldehyde-based tanning process. Surprisingly, the cross-linking agent (tanning agent) may be added to the solution before it is electrospun.

Any of the electrospun leathers described herein include a lubricant; the lubricant may be added by a fatliquoring process. In some variations, the lubricant (e.g., a hydrophobic material such as an oil or fat) may be added during the electrospinning process or after the network has been formed. For example, any of these methods may include incorporating a lubricant into the unwoven electrospun network of collagen through a fat liquoring processes.

In general, any of these electrospun leathers may also be dyed and may therefore include a dying step. For example, any of these methods may include dying the unwoven electrospun network of collagen. Similarly, these materials may be finished by applying a finish to the surface of the unwoven electrospun network of collagen. For example, the method may include retanning (e.g., a second tanning/crosslinking step) and finishing the unwoven electrospun network of collagen. Any of these methods may include using the formed material to create a leather product. For example, any of these methods may include forming from the unwoven electrospun network of collagen one or more of a: watchstrap, footwear, wallet, jewelry, belt, glove, handbag, briefcase, piece of luggage, upholstery for furniture or transportation, or clothing article.

### Example 2 (not according to the present invention)

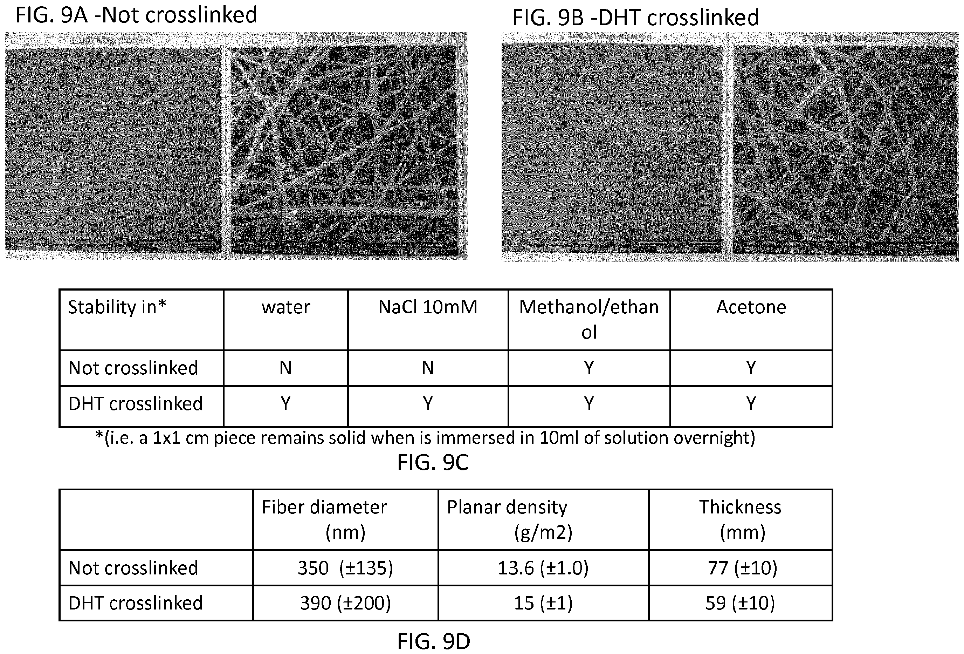

FIGS. 9A-9D illustrate one example of an electrospun leather fabricated as described herein. In this example, Type I collagen was isolated from bovine skin by acid/basic style extraction method was frozen and lyophilized. The lyophilized protein was dissolved in acidic solution before being electrospun. The fiber orientation was random as observed by SEM (FIG. 9A). This electrospun network was cross-linked to improve stability. A dehydrothermal cross linker (DHT; FIG. 9B) was used. One noticeable effect was the resistance in aqueous solutions (FIG. 9C). The DHT cross-linked network remained intact while the un-cross-linked material dissolved in water and saline solutions. The formed networks were measured. The characteristics of the fibers that constituted the networks were evaluated by SEM imaging (FIG. 9D).

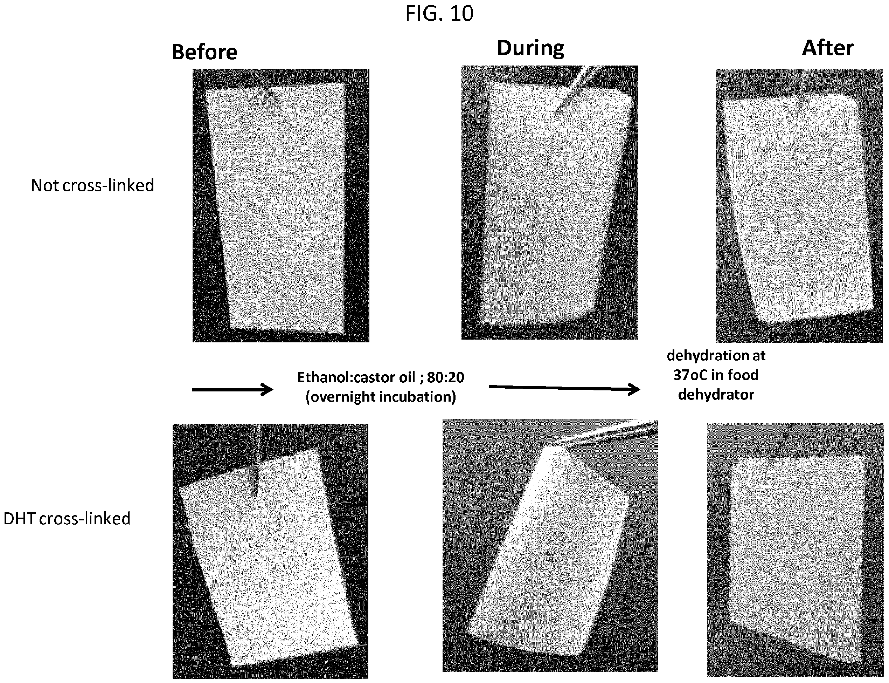

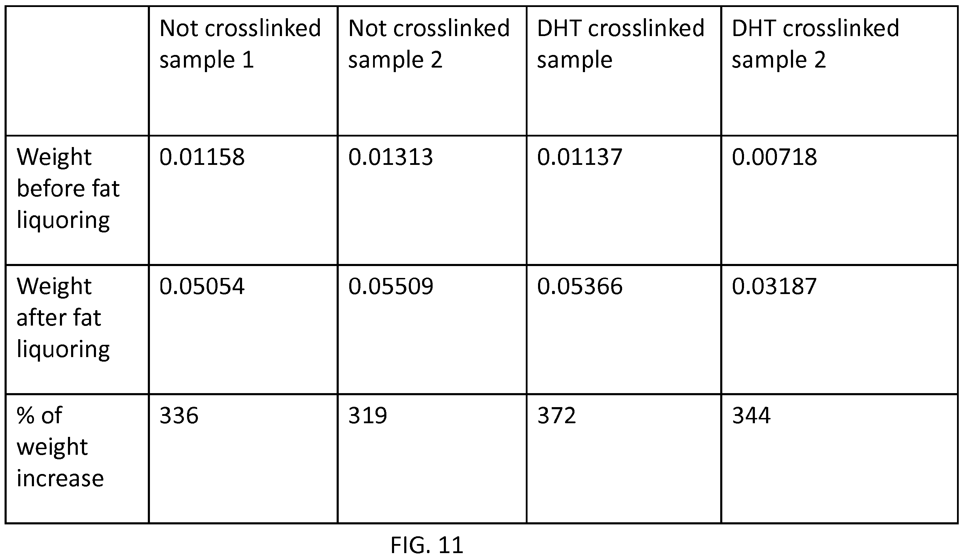

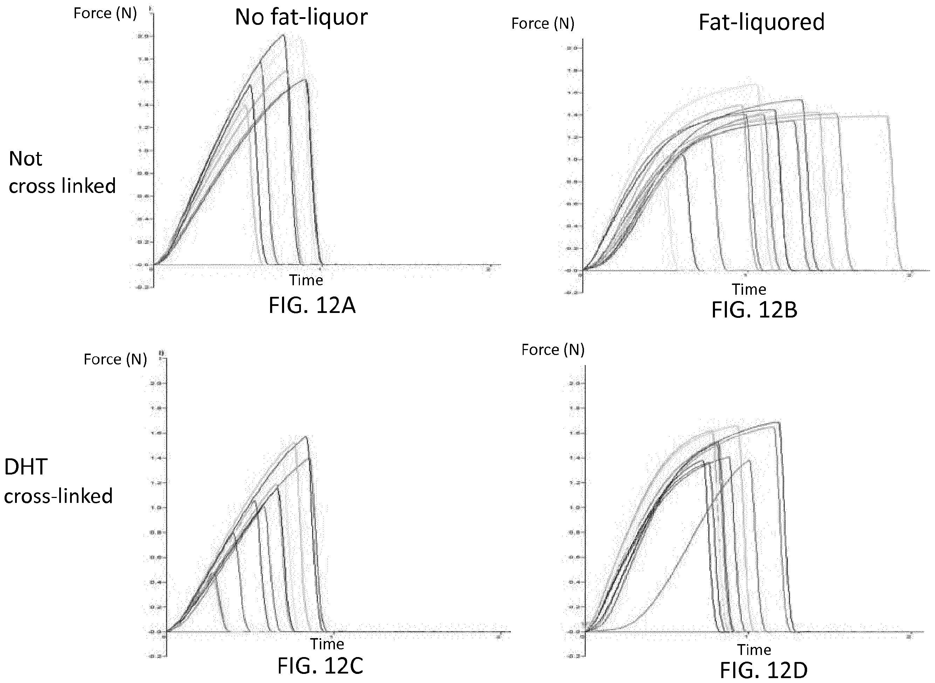

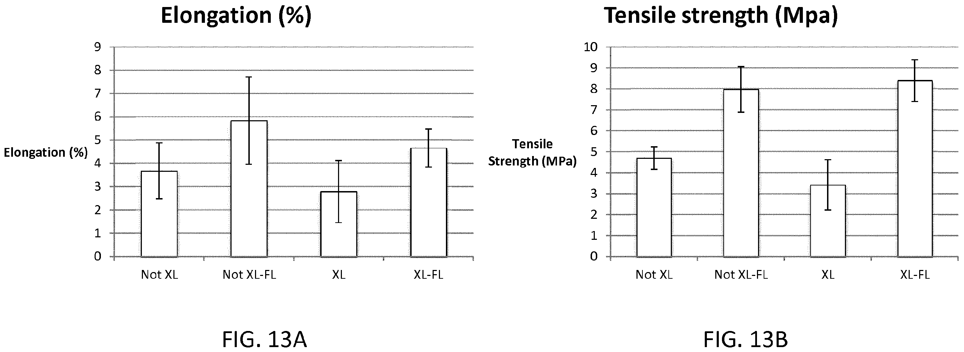

The electrospun collagen sheets were incubated in a fat liquor solution containing 20% (v/v) castor oil in 80% ethanol overnight while shaking at 40rpm. Following incubation in the castor oil solution, the electrospun sheets were dried overnight at 37°C in a dehydrator. The samples were imaged before, during and after the fat liquoring process was completed (FIG. 10). After drying, the weight and mechanical properties of the material were measured and compared to the ones of the untreated sheets. (Shown in FIGS. 11 and 12A-12D). Weight measurements and mechanical analysis confirmed penetration of the castor oil into the fibrillar collagen network, preventing fibril-fibril sticking during drying (FIGS. 13A-13B).

### Example 3 (not according to the present invention)

Type I collagen isolated from bovine skin by acid/basic style extraction method was frozen and lyophilized. The lyophilized protein was dissolved in acidic solution before being electrospun. In this example, the diameter and orientation were controlled to achieve multilayered network with distinctive properties in each layer. The bottom layer was composed of larger bundles of fibers (to mimic the corium) while the top layer was made of smaller fibers in random orientation.

The electrospun collagen multi-layered network was incubated in a fat liquor solution containing 20% (v/v) castor oil in 80% ethanol overnight while shaking at 40rpm. Following incubation in the castor oil solution, the electrospun sheets were dried overnight at 37oC in a dehydrator. The multi-layered networks described herein may have a higher mechanical strength, and/or lower water solubility than the monolayers (even thick monolayers) describe in Example 2, above.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the scope of the invention as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method for making an electrocompacted leather material, the method comprising:
applying a solution of non-human, monomeric collagen in an aqueous buffer onto an electrocompaction surface, wherein the solution is substantially free of collagen fibers and fibril bundles;
compacting the collagen into a dense network with an electrical field;
inducing fibrillation of the collagen to form collagen fibrils;
stabilizing the fibrillar collagen network;
incorporating lubricant in the collagen network; and
removing water from the stabilized network.

2. The method of claim 1, wherein the collagen monomers are polymerized into dimers, trimers and higher order oligomers prior to compaction and fibrillation.

3. The method of claim 1 or claim 2, wherein stabilizing comprises adding a crosslinking agent to stabilize the collagen fibrils.

4. The method of any preceding claim, further comprising reacting the collagen fibrils with a dewatering agent to displace water bound to the collagen fibrils with the dewatering and coalescing agent.

5. The method of claim 4, wherein the dewatering agent is a sulfonated condensation product of an aromatic compound.

6. The method of any preceding claim, wherein fibrillation is induced through the addition of salts such as sodium phosphate, potassium phosphate, potassium chloride and sodium chloride.

7. The method of any preceding claim, wherein fibrillation is induced through a pH shift following the addition of acids or bases such as sodium carbonate, sodium bicarbonate and sodium hydroxide.

8. The method of any preceding claim, wherein stabilization of the fibrillar collagen network is accomplished through incorporating molecules with di, tri and multifunctional reactive groups such as chromium, amine, carboxylic acid, sulfate, sulfite, sulfonate, aldehyde, hydrazide, sulfhydryl, diazirine, aryl-azide, acrylate, epoxide, or phenol.

9. The method of any preceding claim, wherein the fibrillated collagen is stabilized through chromium, aldehyde or vegetable tannin based tanning processes.

10. The method of any preceding claim, wherein water is removed from the fibrillated collagen through solvent exchanges with solvents such as acetone, ethanol, or diethyl ether.

11. The method of any preceding claim, wherein water is removed from the fibrillated collagen through air or vacuum drying.

12. The method of any preceding claim, wherein lubricating fats and oils are uniformly incorporated into the material.

13. The method of any preceding claim, wherein the collagen monomers are recombinant collagen.

14. The method of any preceding claim, wherein the fibril density is 5 mg/cc to 500 mg/cc.

15. The method of any preceding claim, wherein the thickness of the resulting electrocompacted leather material is 0.05 mm to 2 mm.

## Patentansprüche

1. Verfahren zum Herstellen eines elektroverdichteten Ledermaterials, wobei das Verfahren Folgendes umfasst:
Auftragen einer Lösung von nicht-humanem, monomeren Kollagen in einem wässrigen Puffer auf eine Elektroverdichtungsfläche, wobei die Lösung im Wesentlichen frei von Kollagenfasern und Fibrillenbündeln ist;
Verdichten des Kollagens zu einem dichten Netz mit einem elektrischen Feld;
Induzieren von Fibrillierung des Kollagens, um Kollagenfibrillen zu bilden;
Stabilisieren des fibrillären Kollagennetzes;
Einarbeiten von Schmiermittel in das Kollagennetz; und
Entfernen von Wasser aus dem stabilisierten Netz.

2. Verfahren nach Anspruch 1, wobei die Kollagenmonomere vor Verdichtung und Fibrillierung zu Dimeren, Trimeren und Oligomeren höherer Ordnung polymerisiert werden.

3. Verfahren nach Anspruch 1 oder Anspruch 2, wobei Stabilisieren Zugeben eines Vernetzungsmittels umfasst, um die Kollagenfibrillen zu stabilisieren.

4. Verfahren nach einem vorhergehenden Anspruch, ferner umfassend Reagieren der Kollagenfibrillen mit einem Entwässerungsmittel, um Wasser, das an die Kollagenfibrillen gebunden ist, mit dem Entwässerungs- und Koaleszenzmittel zu verdrängen.

5. Verfahren nach Anspruch 4, wobei das Entwässerungsmittel ein sulfoniertes Kondensationsprodukt einer aromatischen Verbindung ist.

6. Verfahren nach einem vorhergehenden Anspruch, wobei Fibrillierung durch die Zugabe von Salzen, wie z. B. Natriumphosphat, Kaliumphosphat, Kaliumchlorid und Natriumchlorid, induziert wird.

7. Verfahren nach einem vorhergehenden Anspruch, wobei Fibrillierung durch eine pH-Verschiebung nach der Zugabe von Säuren oder Basen, wie z. B. Natriumcarbonat, Natriumbicarbonat und Natriumhydroxid, induziert wird.

8. Verfahren nach einem vorhergehenden Anspruch, wobei Stabilisierung des fibrillären Kollagennetzes durch Integrieren von Molekülen mit di-, tri- und multifunktionellen reaktiven Gruppen, wie z. B. Chrom, Amin, Carbonsäure, Sulfat, Sulfit, Sulfonat, Aldehyd, Hydrazid, Sulfhydryl, Diazirin, Arylazid, Acrylat, Epoxid oder Phenol, erreicht wird.

9. Verfahren nach einem vorhergehenden Anspruch, wobei das fibrillierte Kollagen durch Gerbprozesse auf Basis von Chrom, Aldehyd oder pflanzlichen Gerbstoffen stabilisiert wird.

10. Verfahren nach einem vorhergehenden Anspruch, wobei Wasser aus dem fibrillierten Kollagen durch Lösungsmittelaustausch mit Lösungsmitteln, wie z. B. Aceton, Ethanol oder Diethylether, entfernt wird.

11. Verfahren nach einem vorhergehenden Anspruch, wobei Wasser aus dem fibrillierten Kollagen durch Luft- oder Vakuumtrocknung entfernt wird.

12. Verfahren nach einem vorhergehenden Anspruch, wobei Schmierfette und - öle einheitlich in das Material eingearbeitet sind.

13. Verfahren nach einem vorhergehenden Anspruch, wobei die Kollagenmonomere rekombinantes Kollagen sind.

14. Verfahren nach einem vorhergehenden Anspruch, wobei die Fibrillendichte 5 mg/cm³ bis 500 mg/cm³ ist.

15. Verfahren nach einem vorhergehenden Anspruch, wobei die Dicke des resultierenden elektroverdichteten Ledermaterials 0,05 mm bis 2 mm ist.

## Revendications

1. Procédé de fabrication d'un matériau électrocompressé en cuir, le procédé comprenant :
l'application d'une solution de collagène non humain et monomère dans un tampon aqueux sur une surface d'électrocompression, la solution étant sensiblement exempte de fibres de collagène et de faisceaux de fibrilles ;
la compression du collagène en un réseau dense avec un champ électrique ;
le fait d'induire la fibrillation du collagène pour former des fibrilles de collagène ;
la stabilisation du réseau de collagène fibrillaire ;
l'incorporation de lubrifiant dans le réseau de collagène ; et
le retrait de l'eau du réseau stabilisé.

2. Procédé selon la revendication 1, dans lequel les monomères de collagène sont polymérisés en dimères, trimères et en oligomères d'ordre supérieur avant la compression et la fibrillation.

3. Procédé selon la revendication 1 ou la revendication 2, dans lequel la stabilisation comprend l'ajout d'un agent réticulant pour stabiliser les fibrilles de collagène.

4. Procédé selon l'une quelconque des revendications précédentes, comprenant en outre la mise en réaction des fibrilles de collagène avec un agent déshydratant pour déplacer l'eau liée aux fibrilles de collagène avec l'agent déshydratant et coalescent.

5. Procédé selon la revendication 4, dans lequel l'agent déshydratant est un produit de condensation sulfoné d'un composé aromatique.

6. Procédé selon l'une quelconque des revendications précédentes, dans lequel la fibrillation est induite par l'ajout de sels tels que le phosphate de sodium, le phosphate de potassium, la chlorure de potassium et la chlorure de sodium.

7. Procédé selon l'une quelconque des revendications précédentes, dans lequel la fibrillation est induite par une variation de pH à la suite de l'ajout d'acides ou de bases tels que le carbonate de sodium, le bicarbonate de sodium et l'hydroxyde de sodium.

8. Procédé selon l'une quelconque des revendications précédentes, dans lequel la stabilisation du réseau de collagène fibrillaire est effectuée par l'incorporation dans des molécules de groupes réactifs di-, tri- et multifonctionnels tels que le chrome, l'amine, l'acide carboxylique, le sulfate, le sulfite, le sulfonate, l'aldéhyde, l'hydrazide, le sulfhydryle, la diazirine, l'aryl azide, l'acrylate, l'époxyde ou le phénol.

9. Procédé selon l'une quelconque des revendications précédentes, dans lequel le collagène fibrillé est stabilisé par des processus de tannage à base de chrome, d'aldéhyde ou de tanins végétaux.

10. Procédé selon l'une quelconque des revendications précédentes, dans lequel l'eau est enlevée du collagène fibrillé par des échanges de solvants avec des solvants tels que l'acétone, l'éthanol, ou l'éther diéthylique.

11. Procédé selon l'une quelconque des revendications précédentes, dans lequel l'eau est enlevée du collagène fibrillé par séchage par air ou sous vide.

12. Procédé selon l'une quelconque des revendications précédentes, dans lequel des graisses et des huiles lubrifiantes sont uniformément incorporées dans le matériau.

13. Procédé selon l'une quelconque des revendications précédentes, dans lequel les monomères de collagène constituent un collagène recombinant.

14. Procédé selon l'une quelconque des revendications précédentes, dans lequel la densité fibrillaire va de 5 mg/cm³ à 500 mg/cm³.

15. Procédé selon l'une quelconque des revendications précédentes, dans lequel l'épaisseur du matériau électrocompressé en cuir obtenu va de 0,05 mm à 2 mm.
